# EUROPEAN PATENT APPLICATION

(11) **EP 2 581 812 A2**
(43) Date of publication of application: **17.04.2013**
(21) Application number: 12006833.3
(22) Date of filing: 01.10.2012
(51) Int. Cl.: G06F 3/041

(54) **Display module and mobile terminal having the same**

(30) Priority: 10.10.2011 KR 20110103287
(71) Applicant: LG Electronics, Seoul, 150-721 (KR)
(72) Inventor: Park, Jungjae, Gyeonggi-Do (KR); Lee, Soomi, Seoul (KR)
(74) Representative: TER MEER - STEINMEISTER & PARTNER GbR

(57) **Abstract**

A mobile terminal includes: a terminal body; and a display module (200) mounted to the terminal body, and configured to sense a touch input, wherein the display module comprises: a display device (230) configured to output an image; a first substrate (210) disposed on the display device (230), and having first patterns which extend to a first direction with crossing the display device; a touch controller (240) configured to process a signal transmitted from the first patterns; and a first signal transmitting unit (212) configured to electrically connect the touch controller and the first patterns to each other, wherein the first signal transmitting unit (212) is configured to cover one or more side surfaces of the display device (230). Under this configuration, a bezel portion can have a reduced width.

## Description

### BACKGROUND OF THE INVENTION

### 1. Field of the Invention

The present invention relates to a mobile terminal, and particularly, to a display module having a means for sensing a touch input, and a mobile terminal having the same.

### 2. Background of the Invention

A mobile terminal is a device that can be carried around and has one or more functions such as to perform voice and video call communications, inputting and outputting information, storing data, and the like.

Recently, as functions of the mobile terminal become more diversified, the mobile terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device by means of hardware or software. For instance, is being provided a user interface (UI) environment for allowing a user to search for or select a function in easier and more convenient manners.

Recently, an input method by touch is being applied so as to enhance a user interface (UI) with a simpler appearance. In case of a mobile terminal having a touch panel, a bezel portion disposed at two ends of the mobile terminal have should have some margins for wires which connects the touch panel with a micro processor that processes a sensed signal.

As a method for implementing an output screen having a wider area with respect to a liquid crystal (LC) panel of the same size, may be considered structures of new touch panels capable of reducing the width of a bezel portion.

### SUMMARY OF THE INVENTION

Therefore, an aspect of the detailed description is to provide a mobile terminal having a touch panel of a new structure capable of reducing the width of a bezel portion.

Another aspect of the detailed description is to provide a mobile terminal capable of increasing an image area with respect to a main area on a liquid crystal (LC) panel.

To achieve these and other advantages and in accordance with the purpose of this specification, as embodied and broadly described herein, there is provided a display module, comprising: a display device; a first substrate disposed on the display device, and having first patterns which extend to a first direction with crossing the display device; a touch controller configured to process a signal transmitted from the first patterns; and a first signal transmitting unit configured to electrically connect the touch controller and the first patterns to each other, wherein the first signal transmitting unit is configured to cover one or more side surfaces of the display device.

To achieve these and other advantages and in accordance with the purpose of this specification, as embodied and broadly described herein, there is also provided a mobile terminal, comprising: a terminal body; and a display module mounted to the terminal body, and configured to sense a touch input, wherein the display module comprises a display device configured to output an image; a first substrate disposed on the display device, and having first patterns which extend to a first direction with crossing the display device; a touch controller configured to process a signal transmitted from the first patterns; and a first signal transmitting unit configured to electrically connect the touch controller and the first patterns to each other, wherein the first signal transmitting unit is configured to cover one or more side surfaces of the display device.

According to an embodiment of the present invention, the mobile terminal may further comprise a second substrate disposed on the first substrate, and having second patterns which extend to a second direction crossing the first direction; and a second signal transmitting unit configured to electrically connect the touch controller and the second patterns to each other.

According to an embodiment of the present invention, the first substrate may include second patterns which extend to a second direction crossing the first direction, and the first patterns and the second patterns may be disposed on the same plane. And, either the first patterns or the second patterns may be connected to each other by bridges.

According to an embodiment of the present invention, the first signal transmitting unit and the second signal transmitting unit may be formed on the first substrate.

According to an embodiment of the present invention, the mobile terminal may further comprise insulating layers formed at intersections between the first patterns and the second patterns, and configured to insulate the first and second patterns from each other.

According to an embodiment of the present invention, the first substrate may include a wiring unit bent from one side end of the display device, and configured to cover one side surface of the display device. And, the first signal transmitting unit may be formed at the wiring unit.

According to an embodiment of the present invention, the wiring unit may extend such that at least part thereof covers a rear surface of the display device.

According to an embodiment of the present invention, the mobile terminal may further comprise a first case and a second case which form the appearance of the terminal body, and the wiring unit may be adhered to a side surface of the display device.

According to an embodiment of the present invention, the mobile terminal may further comprise a window having second patterns which extend in a second direction crossing the first direction, and disposed on the first substrate so as to cover the first substrate.

According to an embodiment of the present invention, the mobile terminal may further comprise a second signal transmitting unit configured to electrically connect the touch controller and the second patterns to each other. And, the second signal transmitting unit may be formed on the first substrate.

The present invention may have the following advantages.

Firstly, since the signal transmitting unit is disposed on the side surface or the rear surface of the display device, the width of a bezel portion can be more reduced.

Secondly, due to the reduced width of the bezel portion, an image area with respect to a main area can be more increased.

Thirdly, since the interval of signal lines of the signal transmitting unit is widened, the degree of sensing a touch input can be enhanced.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram of a mobile terminal according to an embodiment of the present invention;
FIG. 2 is a front perspective view of a mobile terminal according to the present invention;
FIG. 3 is a rear perspective view of the mobile terminal of FIG. 2;
FIG. 4 is a disassembled perspective view of a touch panel according to a comparative embodiment of the present invention;
FIG. 5 is a disassembled perspective view of a touch panel according to an embodiment of the present invention;
FIGS. 6A and 6B are sectional views showing a coupled state between a touch panel and a liquid crystal panel according to a modification example of the touch panel of FIG. 5;
FIG. 7 is a sectional view of a mobile terminal according to an embodiment of the present invention;
FIG. 8 is a conceptual view of touch sensing patterns according to an embodiment of the present invention;
FIGS. 9A and 9B are planar and sectional views of touch sensing patterns according to a modification embodiment of FIG. 8; and
FIG. 10 is a disassembled perspective view of a touch panel according to still another embodiment of the present invention.

### DETAILED DESCRIPTION OF THE INVENTION

Hereinafter, a display module according to an embodiment of the present invention, and a mobile terminal having the same will be explained in more detail with reference to the attached drawings. For the sake of brief description with reference to the drawings, the same or equivalent components will be provided with the same reference numbers, and description thereof will not be repeated. A singular expression used in the present invention may include a plural concept unless there is a contextually distinctive difference therebetween.

The mobile terminal according to the present invention may include a portable phone, a smart phone, a laptop computer, a digital broadcasting terminal, Personal Digital Assistants (PDA), Portable Multimedia Player (PMP), an electronic book (E-book), a navigation system, etc.

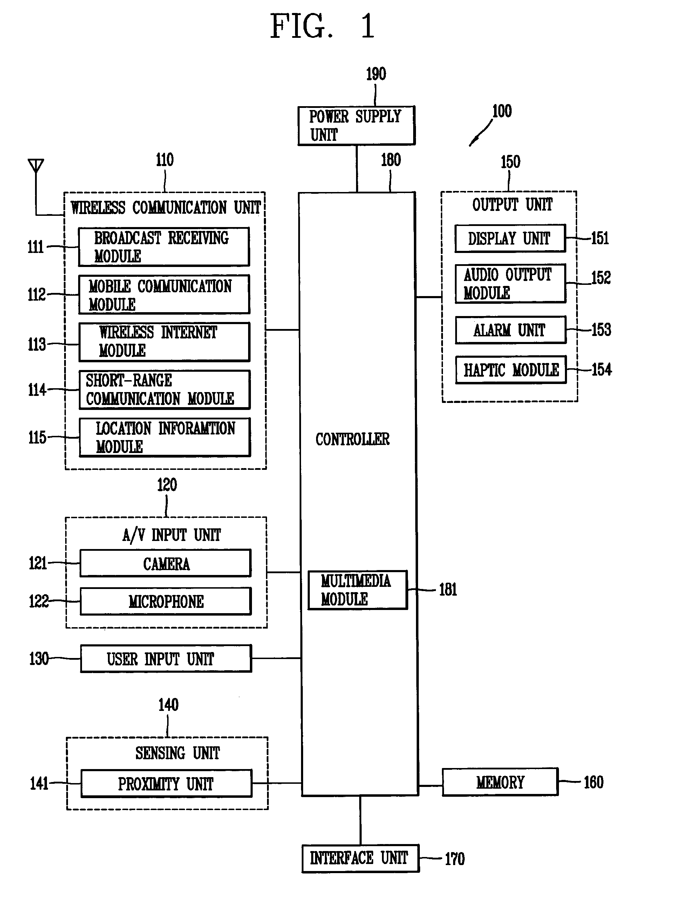

FIG. 1 is a block diagram of a mobile terminal 100 according to an embodiment of the present invention.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply unit 190, and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position information module 115 and the like.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast associated information may refer to information associated with a broadcast channel, a broadcast program or a broadcast service provider. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network and. In this case, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcasting signals and/or broadcasting associated information received through the broadcast receiving module 111 may be stored in the memory 160.

The mobile communication module 112 transmits/receives wireless signals to/from at least one of network entities (e.g., base station, an external terminal, a server, etc.) on a mobile communication network. Here, the wireless signals may include audio call signal, video call signal, or various formats of data according to transmission/reception of text/multimedia messages.

The wireless internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), World Interoperability for Microwave Access (Wimax), High Speed Downlink Packet Access (HSDPA), and the like.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, and the like.

The position information module 115 denotes a module for sensing or calculating a position of a mobile terminal. An example of the position information module 115 may include a Global Position System (GPS) module.

Referring to FIG. 1, the A/V input unit 120 is configured to receive an audio or video signal. The A/V input unit 120 may include a camera 121, a microphone 122 or the like. The camera 121 processes image data of still pictures or video acquired by an image capture device in a video capturing mode or an image capturing mode. The processed image frames may be displayed on a display 151.

The image frames processed by the camera 121 may be stored in the memory 160 or transmitted via the wireless communication unit 110. The camera 121 may be provided in two or more according to the configuration of the mobile terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of user contact with the mobile terminal 100, the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is open or closed. In addition, the sensing unit 140 can detect whether or not the power supply unit 190 supplies power or whether or not the interface unit 170 is coupled with an external device. The sensing unit 140 may include a proximity sensor 141.

The output unit 150 is configured to provide outputs in a visual, audible, and/or tactile manner. The output unit 150 may include the display 151, an audio output module 152, an alarm unit 153, a haptic module 154, and the like.

The display 151 may display information processed in the mobile terminal 100. For example, when the mobile terminal 100 is in a phone call mode, the display 151 may display a User Interface (UI) or a Graphic User Interface (GUI) associated with a call or other communication (such as text messaging, multimedia file downloading, etc.). When the mobile terminal 100 is in a video call mode or image capturing mode, the display 151 may display a captured image and/or received image, a UI or GUI that shows videos or images and functions related thereto, and the like.

The display 151 may include at least one of a Liquid Crystal Display (LCD), a Thin Film Transistor-LCD (TFT-LCD), an Organic Light Emitting Diode (OLED) display, a flexible display, a three-dimensional (3D) display, or the like.

Some of these displays may be configured to be transparent so that outside may be seen therethrough, which may be referred to as a transparent display. A representative example of the transparent display may include a Transparent Organic Light Emitting Diode (TOLED), and the like. The rear surface portion of the display 151 may also be implemented to be optically transparent. Under this configuration, a user can view an object positioned at a rear side of a body through a region occupied by the display 151 of the body.

The display 151 may be implemented in two or more in number according to a configured aspect of the mobile terminal 100. For instance, a plurality of displays may be arranged on one surface integrally or separately, or may be arranged on different surfaces.

Here, if the display 151 and a touch sensitive sensor (referred to as a touch sensor) have a layered structure therebetween, the structure may be referred to as a touch screen. The display 151 may be used as an input device rather than an output device. The touch sensor may be implemented as a touch film, a touch sheet, a touch pad, and the like.

The touch sensor may be configured to convert changes of a pressure applied to a specific part of the display 151, or a capacitance occurring from a specific part of the display 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display 151 has been touched.

Referring to FIG. 1, a proximity sensor 141 may be arranged at an inner region of the mobile terminal blocked by the touch screen, or near the touch screen. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may convert and output as sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, and so on.

The alarm unit 153 may provide outputs to inform about the occurrence of an event of the mobile terminal 100. Typical events may include call reception, message reception, key signal inputs, a touch input, etc. In addition to audio or video outputs, the alarm unit 153 may provide outputs in a different manner to inform about the occurrence of an event. The video signal or the audio signal may be output via the display 151 or the audio output module 152. Accordingly, the display 151 or the audio output module 152 may be classified as a part of the alarm unit 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects (signals) through a user's direct contact, or a user's muscular sense using a finger or a hand. The haptic module 154 may be implemented in two or more in number according to the configuration of the mobile terminal 100.

The memory 160 may store a program for the processing and control of the controller 180. Alternatively, the memory 160 may temporarily store input/output data (e.g., phonebook data, messages, still images, video and the like). Also, the memory 160 may store data relating to various patterns of vibrations and audio output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), a Universal Subscriber Identity Module (USIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply unit 190 serves to supply power to each component by receiving external power or internal power under control of the controller 180.

Various embodiments described herein may be implemented in a computer-readable medium using, for example, software, hardware, or some combination thereof.

For a hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

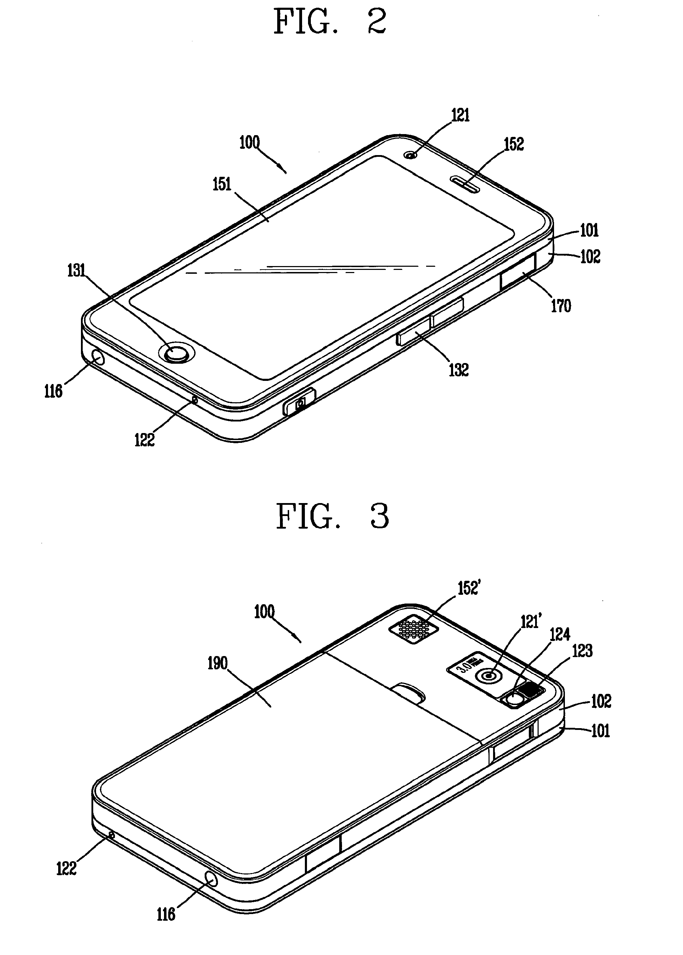

FIG. 2 is a front perspective view of the mobile terminal 100 according to the present invention.

The mobile terminal 100 according to the present invention is a bar type mobile terminal. However, the present invention is not limited to this, but may be applied to a slide type in which two or more bodies are coupled to each other so as to perform a relative motion, a folder type, or a swing type, a swivel type and the like.

A case (casing, housing, cover, etc.) forming the appearance of a body may include a front case 101 and a rear case 102. A space formed by the front case 101 and the rear case 102 may accommodate various components therein. At least one intermediate case may further be disposed between the front case 101 and the rear case 102.

Such cases may be formed by injection-molded synthetic resin, or may be formed using a metallic material such as stainless steel (STS) or titanium (Ti).

At the terminal body, may be disposed a display 151, an audio output unit 152, a camera 121, user input units 130, 131 and 132, a microphone 122, an interface unit 170, etc.

The display 151 occupies most parts of a main surface of the front case 101. The audio output unit 152 and the camera 121 are arranged at a region close to one end of the display 151. The user input unit 131 and the microphone 122 are arranged at a region close to another end of the display 151. The user input unit 132, the interface unit 170, etc. may be disposed on side surfaces of the front case 101 and the rear case 102.

The user input unit 130 is manipulated to receive a command for controlling the operation of the mobile terminal 100, and may include a plurality of manipulation units 131 and 132. The manipulation units 131 and 132 may be referred to as manipulating portions, and may include any type of ones that can be manipulated in a user's tactile manner.

Commands inputted through the user input units 131 and 132 may be variously set. For instance, the first user input unit 131 is configured to input commands such as START, END, SCROLL or the like. The second user input unit 132 is configured to input commands for controlling a level of sound outputted from the audio output unit 152, or commands for converting the current mode of the display 151 to a touch recognition mode.

FIG. 3 is a rear perspective view of the mobile terminal 100 of FIG. 2.

Referring to FIG. 3, a camera 121' may be additionally provided on the rear case 102. The camera 121' faces a direction which is opposite to a direction faced by the camera 121 (refer to FIG. 2), and may have different pixels from those of the camera 121.

For example, the camera 121 may operate with relatively lower pixels (lower resolution). Thus, the camera 121 may be useful when a user can capture his face and send it to another party during a video call or the like. On the other hand, the camera 121' may operate with a relatively higher pixels (higher resolution) such that it can be useful for a user to obtain higher quality pictures for later use. The cameras 121 and 121' may be installed at the body so as to rotate or pop-up.

A flash 123 and a mirror 124 may be additionally disposed close to the camera 121'. The flash 123 operates in conjunction with the camera 121' when taking a picture using the camera 121'. The mirror 124 can cooperate with the camera 121' to allow a user to photograph himself in a self-portrait mode.

An audio output unit 152' may be additionally arranged on a rear surface of the body. The audio output unit 152' disposed on the rear surface of the body may implement a stereo function, together with the audio output unit 152 (refer to FIG. 2) disposed on the front surface of the body. And, the audio output unit disposed on the rear surface of the body may be configured to operate as a speakerphone during a call.

Not only an antenna for calling, but also a broadcast signal receiving antenna 124 may be disposed on the side surface of the terminal body. The antenna 124, part of the broadcast signal receiving module 111 (refer to FIG. 1) may be configured to retract into the terminal body.

A power supply unit 190 for supplying power to the mobile terminal 100 is mounted to the body. The power supply unit 190 may be mounted in the body, or may be detachably mounted to the body.

Hereinafter, a display module 200 according to an embodiment of the present invention, and a mobile terminal having the same will be explained in more details.

The display module 200 is mounted to the mobile terminal 100, which constitutes the display 151. The display module 200 includes a display device 230, and a touch panel formed at the display device 230 and sensing a touch input.

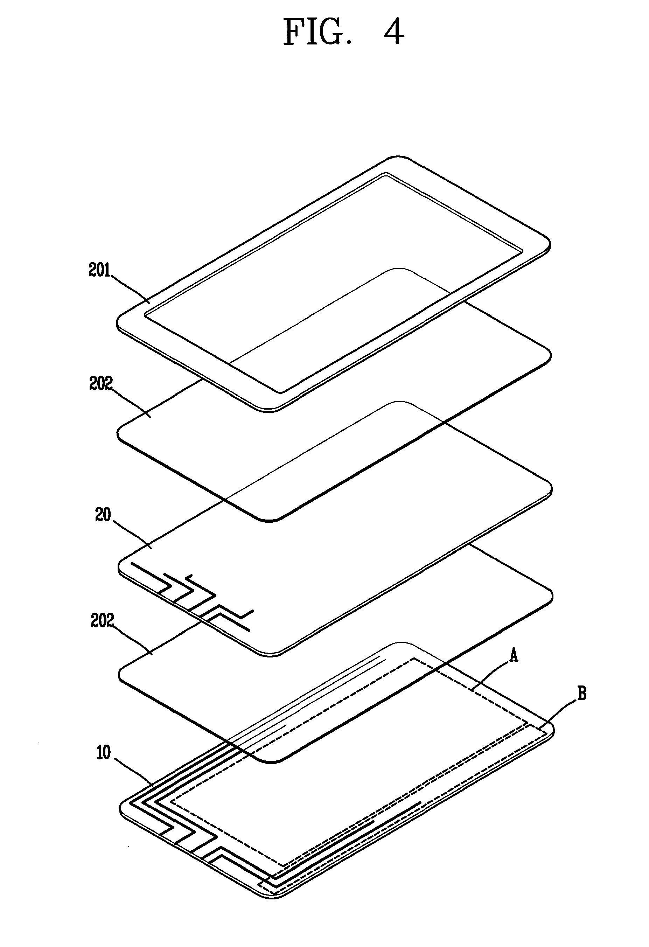

FIG. 4 is a disassembled perspective view of a touch panel (touch screen panel) according to an embodiment of the present invention.

As an example, a capacitance-type touch panel is disposed to cover one of a liquid crystal display (LCD) device, a thin film transistor-liquid crystal display (TFT-LCD) device, an organic light-emitting diode (OLED) device, a flexible display device, and a 3D display device.

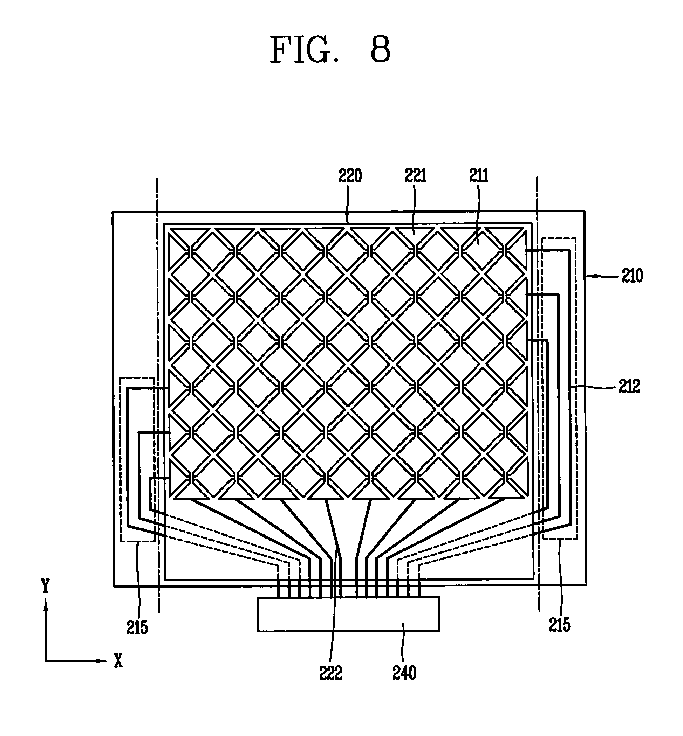

The touch panel largely includes one or more substrates 10, 20, 210, 220 (refer to FIGS. 4 and 8), patterns 211 and 221 (refer to FIG. 8) formed on the substrate, a touch controller 240 (refer to FIG. 8) disposed on or close to the substrate, and signal transmitting units 212 and 222 (refer to FIG. 8) configured to electrically connect the patterns and the touch controller 240.

The substrates are formed of transparent dielectric films, e.g., glass, polyimide (PI), acryl, polyethylene terephthalate (PET) or polyethylene naphthalate (PEN), etc.

In a case where the substrate is formed in plurality, side surfaces of the substrates may be attached to each other by an interlayer adhesion layer 202. An adhesive applied to the interlayer adhesion layer is a transparent bonding material, which may be an optically clear adhesive (OCA), etc.

The first patterns 211 may be formed on the first substrate 210. And, the first patterns 211 may be disposed such that vertexes of a plurality of triangular or quadrangular sensing pads are electrically connected to each other in a horizontal direction, but they are spaced from each other at constant intervals in a vertical direction.

On the contrary, the second patterns 221 may be formed on the second substrate 220. And, the second patterns 221 may be disposed such that vertexes of a plurality of triangular or quadrangular sensing pads are electrically connected to each other in a vertical direction, but they are spaced from each other at constant intervals in a horizontal direction.

The sensing pads may be implemented as lines extending in a vertical direction, and spaced from each other in a horizontal direction. Alternatively, the sensing pads may be implemented as lines extending in a horizontal direction, and spaced from each other in a vertical direction.

The shape of the sensing pad preferably includes a triangle or a quadrangle or a diamond. However, the shape of the sensing pad may include a circle or an oval (ellipse) or a polygon, etc.

As an example, the patterns may be formed on the substrate by using Indium Tin Oxide (ITO), Indium Zinc Oxide (IZO), Al-doped ZnO (AZO), Carbon Nano Tube (CNT), conductive polymer (PEDOT; poly(3, 4-ethylenedioxythiophene)), Ag or Cu transparent ink, etc.

The touch controller 240 is electrically connected to the signal transmitting units so as to entirely drive and control the touch panel. The touch controller 240 may be mounted to a Flexible Printed Circuit (FPC) or a Chip On Film (COF), etc.

The mobile terminal may further include a noise signal removing shielding electrode pattern formed on one region of the substrate, and configured to remove electromagnetic interference (EMI) or noise.

The mobile terminal may further include an outer periphery shielding electrode wiring formed on another region (e.g., touch non-activation region) of the substrate so as to be electrically connected to a shielding electrode pattern.

The shielding electrode pattern may have a plate or mesh form.

As shown in FIG. 4, a window 201 is coupled to an interlayer adhesion layer 202 so as to cover the touch panel. The window may be formed of light-transmissive material, e.g., light-transmissive synthetic resin, or reinforcing glass, etc. And, the window may be formed to include a non-transmissive region.

One surface of the touch panel is divided into an activation region (A) where the patterns are disposed, and a non-activation region (B) where the patterns are not disposed. The signal transmitting unit for connecting the touch controller 240 and the patterns with each other may be formed on the non-activation region (B).

The signal transmitting units may include a first signal transmitting unit 212 configured to electrically connect the first patterns formed on the first substrate with the touch controller 240, and a second signal transmitting unit 222 configured to electrically connect the second patterns formed on the second substrate with the touch controller 240.

If the first and second signal transmitting units are formed on a single substrate, the substrate may be provided with via holes though which the signal transmitting units and the patterns are connected to each other.

The aforementioned non-activation region (B) corresponds to a bezel portion of the display module 200, and the relative size of the non-activation region (B) with respect to the activation region (A) is related to miniaturization of the display module 200 or the mobile terminal. That is, when the size of the non-activation region (B) is reduced, the display module 200 or the mobile terminal can be miniaturized, an image can be output, and the activation region (A) for sensing a touch input can be increased.

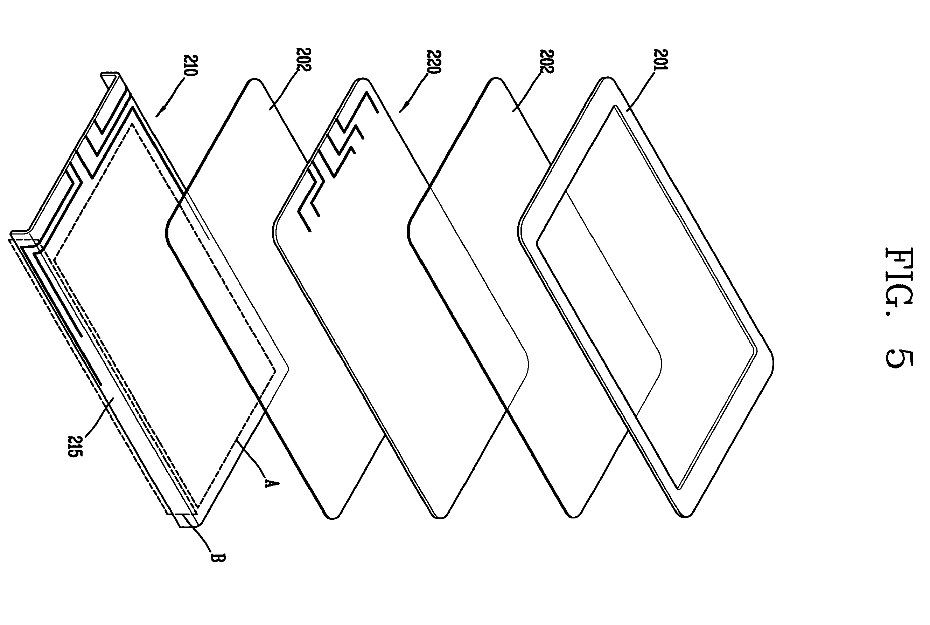

Hereinafter, the structure of the touch panel for miniaturizing the display module 200 or the mobile terminal according to an embodiment of the present invention, will be explained in more details with reference to FIGS. 5 to 7. In this embodiment, the same or similar configuration as/to that of the aforementioned touch panel will not be explained, but only a different configuration will be explained.

FIG. 5 is a disassembled perspective view of a touch panel according to an embodiment of the present invention.

As shown, two side ends of the first substrate 210 are bent, and the bent portions are configured to cover at least one side surface of the display device 230 when coupled to the display device 230. In FIG. 5, the bent portions cover two side surfaces of the display device 230. However, the bent potions may cover one side surface of the display device 230.

The bent portions which cover the side surfaces of the display device 230 are parts where a user's touch input is not detected, which correspond to the non-activation region (B) of the touch panel. On the non-activation region (B), may be formed signal transmitting units 212 and 222 for connecting a touch controller 240 with patterns 211 and 221 of the substrates.

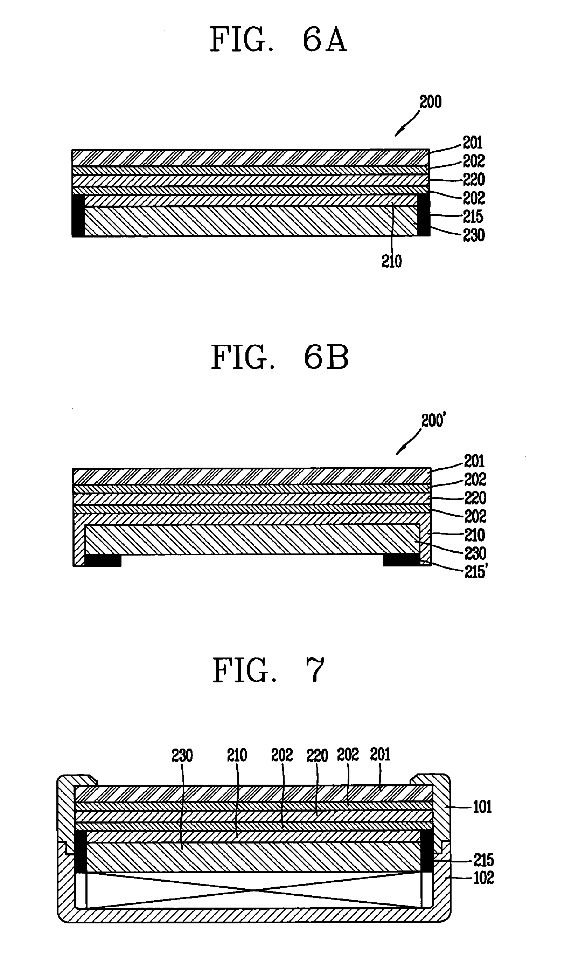

FIGS. 6A and 6B are sectional views showing a coupled state between a touch panel and a liquid crystal panel according to a modification example of the touch panel of FIG. 5.

FIG. 6A illustrates an example of the display module 200. The display module 200 may include a display device 230, a first substrate disposed on the display device 230 and configured to cover two side surfaces of the display device 230, and a second substrate 220 and a window 201 disposed on the first substrate 210. An interlayer adhesion layer 202 formed of an adhesive such as OCA may be formed between the first substrate 210 and the second substrate 220, or between the window 201 and the second substrate 220, or between the first substrate 210 and the display device 230.

A wiring unit 215 may be formed at the non-activation region (B) of the first substrate 210, the non-activation region (B) covering two side surfaces of the display device 230. A first signal transmitting unit 212 may be formed at the wiring unit 215. Since the first signal transmitting unit 212 is formed on the side surface of the display device 230 of the display module 200, the size of a bezel portion_may be reduced. Here, the bezel portion indicates a side region of the activation region on the first substrate, where the signal transmitting unit is formed.

As the signal transmitting unit is disposed on the side surface of the display device 230, the size of the signal transmitting unit, or the interval of signal lines of the signal transmitting unit needs not be reduced. As a result, design degree of freedom can be enhanced. Furthermore, since a resistance value is lowered if the interval of the signal lines increases, the degree to sense a touch input can be enhanced.

FIG. 6B illustrates another example of the display module 200, i.e., display module 200'. The display module 200' may include a display device 230, a first substrate 210 disposed on the display device 230 and configured to cover two side surfaces and at least part of a rear surface of the display device 230, and a second substrate 220 and a window disposed on the first substrate 210. An interlayer adhesion layer 202 formed of an adhesive such as OCA may be formed between the first substrate 210 and the second substrate 220, or between the window 201 and the second substrate 220, or between the first substrate 210 and the display device 230. Unlike in FIG. 6A, the first substrate 210 of FIG. 6B is bent two times from the side ends, and extends to cover part of the rear surface of the display device 230.

A wiring unit 215' may be formed on the rear surface of the display device 230. A first signal transmitting unit 212 may be formed at the wiring unit 215'. More specifically, since the first signal transmitting unit 212 is formed on the side surface of the display device 230 of the display module 200', the size of a bezel portion_may be reduced. Here, the bezel portion indicates a side region of the activation region on the first substrate, where the signal transmitting unit is formed.

As the signal transmitting unit is disposed on the rear surface of the display device 230, the size of the signal transmitting unit, or the interval of signal lines of the signal transmitting unit needs not be reduced. As a result, design degree of freedom can be enhanced. Furthermore, since a resistance value is lowered if the interval of the signal lines increases, the degree to sense a touch input can be enhanced.

Since the design degree of freedom is enhanced, the wiring unit may be formed on one side surface of the first substrate, not on two side surfaces thereof.

FIG. 7 is a sectional view of a mobile terminal according to an embodiment of the present invention.

A first case 101 and a second case 102 which form the appearance of the mobile terminal are combined with each other. And, part of a substrate configured to cover side surfaces of a display device 230 is adhered to the display device 230. Wiring units 215 may be formed at part of the substrate, and the wiring units 215 are adhered to the side surfaces of the display device 230.

Under such configurations, the width of a bezel portion disposed on side surfaces of the mobile terminal in a horizontal direction can be reduced. As a result, the size of an image region for outputting an image can increase with respect to the size of a main area corresponding to the front surface of the mobile terminal.

FIG. 8 is a conceptual view of touch sensing patterns according to an embodiment of the present invention. The touch sensing patterns may be formed on a substrate, thereby constituting part of the aforementioned display module and mobile terminal.

Each touch panel according to present invention is a capacitive type touch panel for sensing a touched part by forming equipotentiality on a conductive film, and by sensing a position on an upper or lower substrate where a voltage change has occurred due to a touch input.

Touch sensing patterns include a plurality of first patterns 211 and a plurality of second patterns 221. The plurality of first patterns 211 are formed on a first substrate 210, and are disposed in parallel in a first direction (e.g., X-axis direction). And, the plurality of second patterns 221 are formed on a second substrate 220, and are disposed in parallel in a second direction crossing the first direction (e.g., Y-axis direction).

First signal transmitting units 212 for connecting the first patterns to a touch controller 240 are formed close to two side ends of the first substrate 210. And, wiring units 215 having the first signal transmitting units 212 formed thereat, are bent when coupled to the display device 230.

A second signal transmitting unit 222 for connecting the second patterns to the touch controller 240 may be formed close to one end of the second substrate 220.

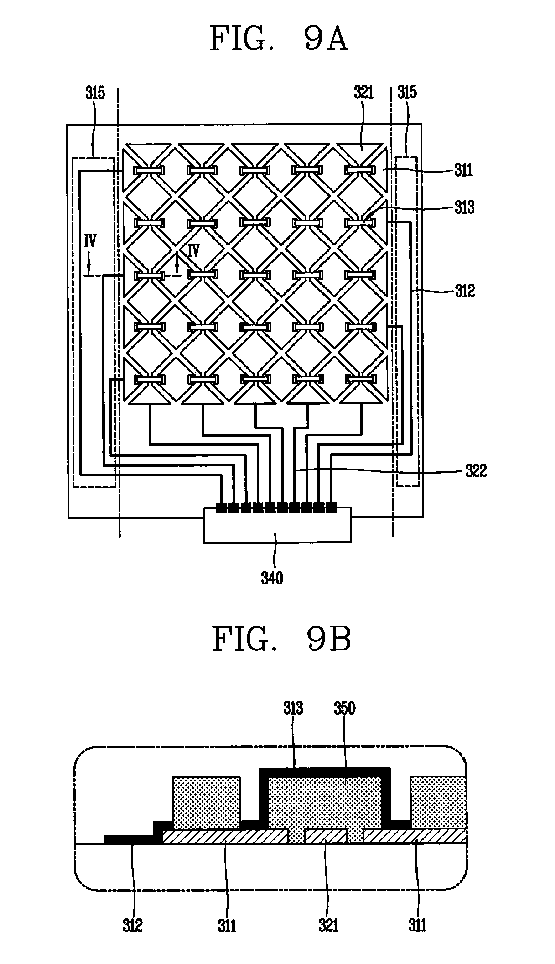

FIG. 9A is a planar view of touch sensing patterns according to a modification embodiment of FIG. 8, and FIG. 9B is a sectional view taken along line IV-IV in FIG. 9A.

Unlike the touch sensing patterns shown in FIG. 8, first patterns 311 and second patterns 312 may be formed on a single substrate.

The first patterns 311 are formed on a single substrate, and are disposed in parallel in a first direction (e.g., X-axis direction). And, the second patterns 312 are formed on a single substrate, and are disposed in parallel in a second direction crossing the first direction (e.g., Y-axis direction).

Since the first patterns 311 and the second patterns 312 are formed on the same plane, they can maintain an electrically-insulated state from each other by insulating layers, even if they cross each other. And, the first patterns 311 spaced from each other may be connected to each other by bridges 313.

First signal transmitting unit 312 for connecting the first patterns 311 to a touch controller 240 are formed close to two side ends of the substrate. And, wiring units 315 having the first signal transmitting units 312 formed thereat, are bent when coupled to the display device 230.

A second signal transmitting unit 322 for connecting the second patterns 312 to the touch controller 240 may be formed close to a lower end of the substrate.

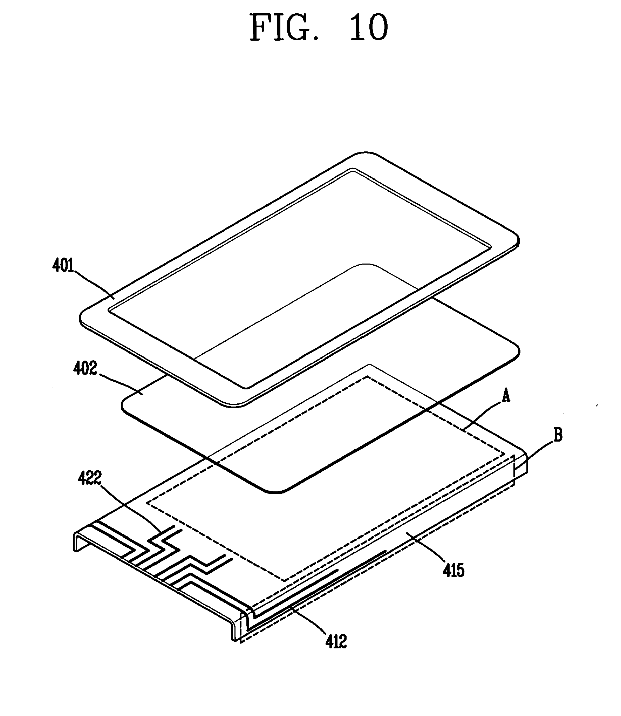

FIG. 10 is a disassembled perspective view of a touch panel according to still another embodiment of the present invention.

The same or similar configuration as/to that of the aforementioned embodiment will not be explained.

First patterns may be formed on a substrate 410, and second patterns may be integrally formed on a window 401 which covers the substrate 410.

An interlayer adhesion layer 402 formed of an adhesive such as OCA may be formed between the substrate 410 and the window 401.

A first signal transmitting unit 412 may be formed close to two side ends of the substrate. And, a wiring unit 415 having the first signal transmitting unit 412 formed thereat, may be bent when coupled to the display device.

A second signal transmitting unit 422 may be formed on one of the substrate and the window.

The foregoing embodiments and advantages are merely exemplary and are not to be considered as limiting the present invention. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a terminal body; and
a display module (200, 200') mounted on the terminal body and configured to sense a touch input,
**characterized in that** the display module comprises:
a display device (230) configured to output an image;
a first substrate (210) configured on the display device and comprising first patterns that extend in a first direction such that they cross the display device;
a touch controller (240) configured to process a signal transmitted via the first patterns; and
a first signal transmitting unit (212, 312, 412) configured to electrically connect the touch controller to the first patterns and to cover one or more side surfaces of the display device.

2. The mobile terminal of claim 1, further comprising:
a second substrate (220) located on the first substrate and comprising second patterns that extend in a second direction such that they cross the first direction; and
a second signal transmitting unit ( 222, 322, 422) configured to electrically connect the touch controller to the second patterns.

3. The mobile terminal of claim 2, wherein the first signal transmitting unit and the second signal transmitting unit are formed on the first substrate.

4. The mobile terminal of claim 2, further comprising insulating layers formed at intersections between the first patterns and the second patterns and configured to insulate the first and second patterns from each other.

5. The mobile terminal of claim 4, wherein the first signal transmitting unit and the second signal transmitting unit are formed on the first substrate.

6. The mobile terminal of any one of claims 1 to 5, wherein:
the first substrate further comprises second patterns that extend in a second direction such that they cross the first direction;
the first patterns and the second patterns are located on a same plane, and
either the first patterns or the second patterns are connected by bridges.

7. The mobile terminal of claim 1, wherein:
the first substrate further comprises a wiring unit (215, 215' ,415) that is bent from one side end of the display device and configured to cover the one or more side surfaces of the display device; and
the first signal transmitting unit is formed at the wiring unit.

8. The mobile terminal of claim 7, wherein the wiring unit extends such that at least a portion of the wiring unit covers a rear surface of the display device.

9. The mobile terminal of claim 7, further comprising a first case and a second case that form an appearance of the terminal body,
wherein the wiring unit is adhered to a side surface of the display device.

10. The mobile terminal of claim 7, further comprising a window located on the first substrate in order to cover the first substrate and having second patterns that extend in a second direction such that they cross the first direction.

11. The mobile terminal of claim 10, further comprising a second signal transmitting unit ( 222, 322, 422) formed on the first substrate and configured to electrically connect the touch controller to the second patterns.
